# EUROPEAN PATENT APPLICATION

(11) **EP 4 271 086 A1**
(43) Date of publication of application: **01.11.2023**
(21) Application number: 22169830.1
(22) Date of filing: 25.04.2022
(51) Int. Cl.: H04W 72/04, H04L 5/00, H04W 52/02, H04W 72/12, H04W 72/14, H04W 74/08, H04L 1/18

(54) **USER EQUIPMENT, SCHEDULING NODE, METHOD FOR USER EQUIPMENT, AND METHOD FOR SCHEDULING NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Some exemplary embodiments relate to a communication device, a base station and respective methods for a communication device and a base station. For example, the communication device is a user equipment (UE) comprising a circuitry and a transceiver. The circuitry may be configured to (a) obtain, from control signalling, an indication indicating a change of a configuration of transmission opportunities of a resource configuration with which the UE is configured, wherein (i) the resource configuration is a configured grant (CG) configuration, a semi-persistent scheduling (SPS) configuration or a scheduling request (SR) configuration, and (ii) the control signalling is a downlink control signalling (DCI) and/or the indication indicating the change is an indication of a validity time, the validity time being a time duration transmission opportunities of the resource configuration are valid after activation of the resource configuration; and (b) change the configuration of the transmission opportunities by applying the indicated change. The transceiver may be configured to receive the control signalling, and to receive or transmit a transmission using one of the transmission opportunities of the changed configuration.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates increasing the efficiency of resource usage, in particular in scenarios with periodic traffic.

In an embodiment, the techniques disclosed here feature an apparatus (e.g. a user equipment, UE). The apparatus comprises a transceiver and a circuitry. The circuitry, in operation: (a) obtains, from control signalling, an indication indicating a change of a configuration of transmission opportunities of a resource configuration with which the UE is configured, wherein (i) the resource configuration is a configured grant (CG) configuration, a semi-persistent scheduling (SPS) configuration or a scheduling request (SR) configuration, and (ii) the control signalling is a downlink control signalling (DCI) and/or the indication indicating the change is an indication of a validity time, the validity time being a time duration transmission opportunities of the resource configuration are valid after activation of the resource configuration; and (b) changes the configuration of the transmission opportunities by applying the indicated change.

The transceiver, in operation, receives the control signalling, and receives or transmits a transmission using one of the transmission opportunities of the changed configuration.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,
- **Fig. 8**: illustrates signalling overhead in case of using scheduling request by the UE for dynamic scheduling of uplink resources for transmitting XR traffic;
- **Fig. 9**: illustrates over-provision of CG uplink resources to a UE transmitting XR traffic;
- **Fig. 10**: illustrates over-provision of SPS downlink resources to a UE receiving XR traffic;
- **Fig. 11**: is a block diagram of a communication system including a user equipment and a base station with their respective exemplary functional structure;
- **Fig. 12**: is a block diagram illustrating an exemplary functional structure of the processing circuitry at the user equipment side;
- **Fig. 13**: is a block diagram illustrating an exemplary functional structure of the processing circuitry at the base station side;
- **Fig. 14**: is a flow chart illustrating exemplary steps performed by a network node as well as exemplary steps performed by a user equipment;
- **Fig. 15**: illustrates the reduction of overhead due to using a group-based DCI that reconfigures each resource configuration of a configuration group;
- **Fig. 16**: illustrates the reduction of overhead due to configuring a UE with a maximum number of active configuration groups;
- **Fig. 17**: illustrates the reduction of overhead due to configuring resource configurations with a validity time; and
- **Fig. 18**: illustrates the reduction of overhead due to linking of two resource configurations, so that one of them activates the other upon its own deactivation.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

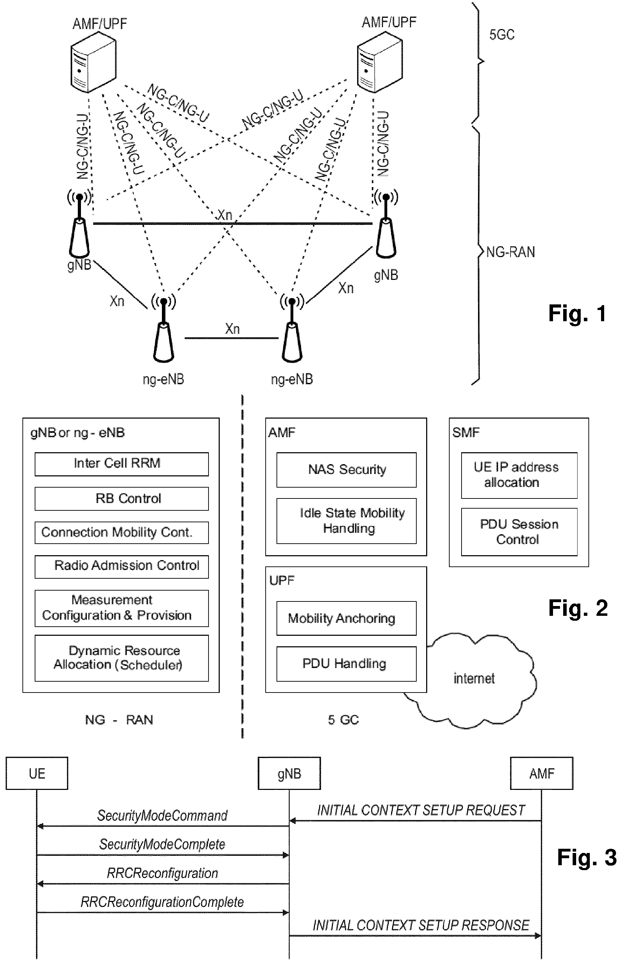

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

Fig. 2 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

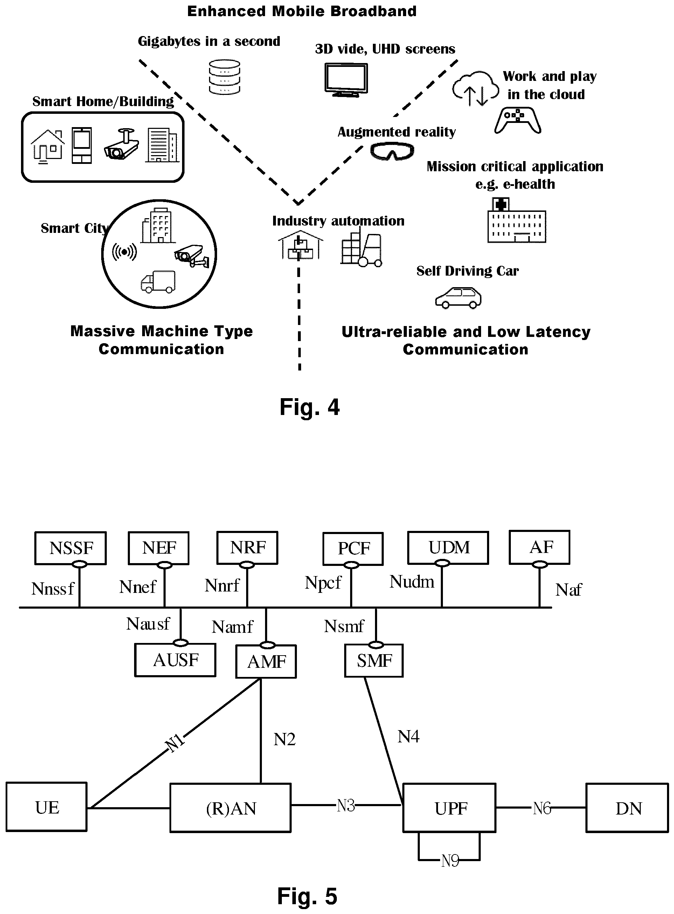

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Bandwidth Parts - BWPs

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v16.6.0.

Switching between configured BWPs may be achieved in different ways. Operation of Bandwidth parts in uplink and downlink is e.g. defined in a 5G NR compliant implementation in 3GPP 38.321 e.g. v16.8.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

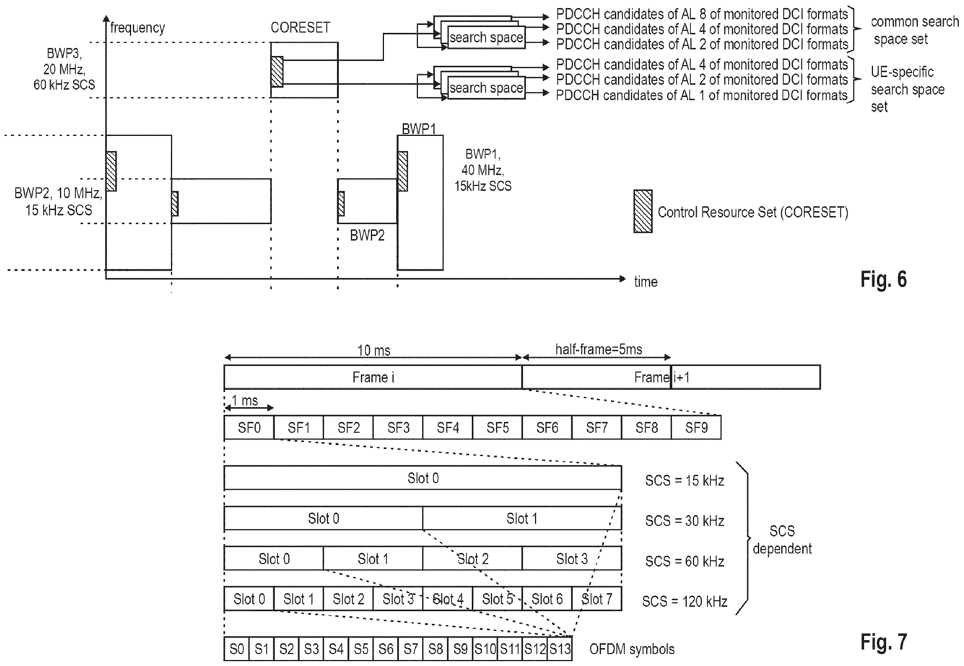

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v16.8.0, different RRCReconfiguration information elements can be used.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0_0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemlnformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, Fig. 6 provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in Fig. 7.

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

### Uplink Control Information in 5G NR and Scheduling Requests (SRs)

Whereas Downlink Control Information is carried by the PDCCH (see above explanation), Uplink Control Information (UCI) can be transmitted on the PUCCH or the PUSCH depending on the situation. Uplink control information can be the channel state information (CSI), the ACK/NACK information and scheduling requests. Not all of these need be carried by a single PUCCH transmission. For instance, the CSI may be carried alone, or the ACK/NACK may be carried alone, or the SR may be carried alone, or the CSI and ACK/NACK are transmitted together in a PUCCH etc.

There are a plurality of different PUCCH formats that can be used for transmitting the UCI, presently there are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used, as exemplary illustrated in the following table (see e.g. 3GPP TS 38.211 e.g. v17.1.0, section 6.3.2).

The UCI can be transmitted on the PUCCH flexibly in the time and frequency domain using specifically assigned radio resources, e.g. PUCCH resource sets. A UE can be configured with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH -Config information element (see e.g. 3GPP TS 38.331 e.g. v16.7.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1.

The current reporting of the UCI in the PUCCH is defined in 3GPP TS 38.213 e.g. v17.1.0, section 9.2.

A PUCCH resource may include one or more of the following parameters:
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. v17.1.0, section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the SchedulingRequestConfig information element and the SchedulingRequestResourceConfig information element (see e.g. 3GPP TS 38.331 v16.7.0, such as section 6.3.2).

In brief, the scheduling request is basically a flag raised by the user equipment to request uplink resources from the uplink scheduler at the base station. Since the device requesting the resources has no PUSCH resource available, the scheduling request is transmitted on the PUCCH using the preconfigured and periodically reoccurring PUCCH resources dedicated to the UE. The serving base station can then assign radio resources to the user equipment.

Unlike LTE, 5G NR supports configuration of multiple scheduling requests from a single device. A logical channel can be mapped to zero or more scheduling request configurations. This provides the gNB not only with information that there is data awaiting for transmission in the device, but also what type of data is awaiting for transmission. This can be useful information for the gNB to consider the various traffic types 5G NR is designed to support. For example, the gNB may want to schedule a user equipment for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, i.e. in the case of multiple logical channels having data to transmit, one exemplary behavior is to trigger the scheduling request corresponding to the highest-priority logical channel. It can only request in repeated and subsequent resources, up to a configurable limit, until a grant is received from gNB. It is also possible to configure a Prohibit timer, controlling how often a scheduling request can be transmitted. In the case of multiple scheduling request resources, both of these configurations are done as per scheduling request resource.

### Semi-persistent scheduling SPS in downlink and Configured grant (CG) in uplink

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant (CG) in the uplink.

In the downlink, semi-persistent-scheduling (SPS) functionality was adopted in 5G NR as a further development of SPS as used for the previous communication system of LTE, in which it is applicable for both uplink and downlink. Furthermore, in LTE, the SPS configuration is typically dedicated to a single device. If the device does not need the allocated periodic resources (e.g. data is only transmitted for specific events, such as a collision warning), the SPS resources that are no used by the UE are wasted.

According to one 5G NR compliant example implementation, the RRC defines the relevant parameters for SPS. An RRC information element SPS-Config is defined in 3GPP 38.331 e.g. V16.7.0 for configuring the downlink semi-persistent transmission. For instance, the RRC defines the periodicity of the configured downlink assignments, the number of HARQ processes, MCS, etc.

Different periodicities are supported for DL SPS, e.g. common for all Subcarrier Spacings (SCS) or depending on the Subcarrier spacings. One example of the currently defined periodicities in TS 38.331, when being dependent on SCS, are presented in the following:
- For SCS of 15 KHz: {1, 2, 3..., 640} ms
- For SCS of 30 KHz: 0.5 × {1, 2, 3..., 1280} ms
- For SCS of 60 KHz: 0.25 × {1, 2, 3..., 2560} ms
- For SCS of 120 KHz: 0.125 x{1, 2, 3..., 5120} ms

The UE may be configured with several (e.g. up to 8) active configured downlink assignments for one BWP of a serving cell. When more than one is configured:
- The network decides which of these configured downlink assignments are active at a time (including all of them); and
- Each configured downlink assignment is activated separately using a DCI command, and deactivation of configured downlink assignments is done using a DCI command, which can either deactivate a single configured downlink assignment or multiple configured downlink assignments jointly.

A PDCCH addressed to the CS-RNTI can either signal and activate the configured downlink assignments, while a PDCCH addressed to CS-RNTI can indicate that the downlink assignment can be implicitly reused according to the periodicity defined by RRC, until deactivated. When required, retransmissions are e.g. explicitly scheduled on PDCCH(s).

SPS is particularly useful for periodic downlink data transmissions such as Voice over IP (VoIP) services. A base station configures the SPS radio resources, and the UE can use these periodic radio resources, without an additional scheduling request procedure.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g.v16.8.0: "NR; NR and NG-RAN Overall Description; Stage 2 (Release 16)", section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called ConfiguredGrantConfig. (see 3GPP TS 38.331 v16.7.0, section 6.3.2 "Radio resource control information elements").

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

Retransmissions other than repetitions are explicitly allocated via PDCCH(s) or via configuration of a retransmission timer.

Different periodicities are supported for UL CG, which may depend on the Subcarrier spacings. One example of the currently defined periodicities in TS 38.331, when being dependent on SCS, are presented in the following:
- For SCS of 15 KHz: Multiple of 1 ms up to 640 ms, or multiple of 2 symbols (1/7 ms), or multiple of 7 symbols (0,5 ms)
- For SCS of 30 KHz: Multiple of 1/2 ms up to 640 ms, or multiple of 2 symbols (1/14 ms), or multiple of 7 symbols (0,25 ms)

### XR - eXtended Reality in Rel. 18

A 3GPP study item relates to eXtended Reality (XR) in RAN 1 and RAN 2. The aim is to provide efficient communications for augmented reality (AR), virtual reality (VR), mixed reality (MR) and cloud gamin. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB). Furthermore, some of the XR applications run on devices with a limited source of energy, such as wearable glasses or handheld devices. Thus, energy efficiency is an important concern.

The XR applications impose a variety of data traffics, including video streams. The video frames are quite large with varying sizes. They are characterized as quasi-periodic, because video frames arrive over a time window. In addition, the periodicity of the time window is non-integer regarding radio frame/slot/symbols.
- Packet size: For a high-quality video stream, the frame size would be around 1M bits after compression for an 8K video. This leads having large size packets.
- Varying size: The frame sizes could vary due to the I-frame or P-frame/B-frame.
- Periodicities: A video stream generally generates 60/90/120 FPS, which correspond to the periodicity of 16.667, 11.111, and 8.333 ms, respectively.
- Jitter: The frame packets would arrive at the gNB/UE over a time window of [-4, 4] ms or even a larger time window.
- Delay budget: The delay budget for delivering the XR packets could be tight, for instance, 10ms for AR/VR and 15ms for cloud gaming.

### UE power saving enhancements for NR

User experience is key to 5G/NR success, not only in terms of experienced data rates and latency but also importantly UE power consumption. UE Power saving enhancements are therefore vital to the success of 5G/NR. In Rel-16, several useful power saving schemes were specified, including power saving signal/DCI as enhancement to connected-mode DRX (cDRX), additional adaptations to maximum MIMO layer number, SCell dormancy behaviour and cross-slot scheduling as enhancements to BWP framework, RRM relaxation as enhancements for idle/inactive-mode power consumption, and UE assistance information.

In Rel-17, additional enhancements are required to address outstanding issues in Rel-16, including idle/inactive-mode power consumption in NR SA deployments, considering both eMBB UEs and Reduced Capability NR Devices, connected-mode power consumption with FR2 deployments, etc. One particular example is to study and specify extension(s) to Rel-16 DCI-based power saving adaptation during DRX Active Time for an active BWP, including PDCCH monitoring reduction when C-DRX is configured (RAN1).

Another power saving study item relates to XR-specific Power Saving in RAN 1 and RAN 2. In particular, power saving techniques are studied for XR (eXtended Reality), e.g. to accommodate XR service characteristics, such as periodicity, multiple flows, jitter, latency, reliability, etc. One technique could relate to enhancing PDCCH monitoring. A further study item relating to XR refers to XR-specific capacity improvements in RAN 1 and RAN 2, and involve studying mechanisms that provide more efficient resource allocation and scheduling for XR service characteristics, such as periodicity, multiple flows, jitter, latency, reliability, etc. Techniques could relate to SPS and CG enhancements and Dynamic scheduling/grant enhancements.

Energy saving can be implemented for the UE, including mechanisms for:
- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching

### Further Improvements

In the above, the study item for XR was briefly presented. However, the current 5G NR releases cannot efficiently support the XR traffics, especially video streams. This is e.g. due to the non-integer periodicity of the video packets, the varying arrival of packets, and the large and varying packet sizes.

The UE might use dynamic scheduling for XR traffics. In one example for the uplink, this would first involve the transmission of a scheduling request from the UE to the base station for requesting uplink resources. The base station could then transmit a dynamic uplink grant to the UE, to be used for the transmission of uplink XR traffic. In the downlink, the base station could transmit a downlink resource assignment on a suitable downlink control channel (such as the PDCCH), indicating the downlink resources that the base station will use for transmitting the downlink XR traffic. Therefore, using dynamic scheduling for XR traffics increases the signaling overhead and imposes that the UE must monitor PDCCH occasions frequently, resulting in high power consumption at the UE. It also increases network power consumption for PDCCH transmissions.

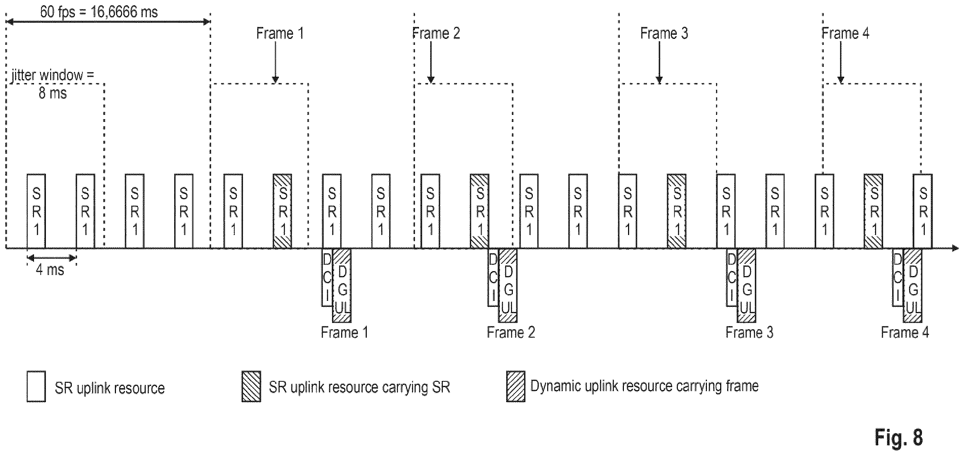

Fig. 8 illustrates such a solution based on dynamic scheduling for the uplink. In particular, Fig. 8 illustrates an exemplary scenario, according to which the UE does not have periodic CG resources available in the uplink but has to request uplink resources using a scheduling request. In said respect, the UE has a scheduling request configuration with periodic uplink resources for transmitting the scheduling request e.g. via the uplink control channel, such as the PUCCH. The SR resources are assumed to have a periodicity of 4 ms. A video stream with 60 fps is assumed, such that a video frame is generated every 1/60=16,6666 ms. The video frames are generated at the UE side over a jitter window of 8 ms. Fig. 8 illustrates how four video frames arrive at different times within the respective jitter windows.

As apparent from Fig. 8, upon arrival of video frame within the jitter window, the UE uses the next SR uplink opportunity to transmit a scheduling request to the base station. The base station, upon receiving the scheduling request, can dynamically grant suitable uplink resources to the UE and transmits a corresponding uplink grant (illustrated as DCI in Fig. 8) to the UE. The UE can then use the granted uplink resources to transmit the video frame in a timely manner to the base station.

The unused SR uplink resources are illustrated with empty boxes, while SR uplink resources used for transmitting SRs are illustrated with striped boxes. Further striped boxes illustrate the dynamically allocated uplink resources for transmitting the video frames.

In order to avoid dynamic scheduling for XR traffic, periodically configured resources, such as SPS or CG, could be used for delivering XR data. This is achieved by reserving periodic resources for the transmissions of the periodic traffic (e.g. XR traffic). In this way, a better reliability with reduced signaling overhead may be achieved, since there is no need to send a DCI indicating individual scheduling resources. For instance, semi persistent scheduling (SPS) and/or configured grant (CG), which have been explained above, could be used for delivering periodic traffic in DL and UL, respectively.. For instance, the UE can be configured with one or several SPS and CG configurations. In particular since the current 5G NR supports only integer periodicities expressed by radio frame/slot/symbols for SPS and CG configuration, such an approach however may require reserving excessive resources, which is not resource and power efficient and would reduce the number of supported devices.

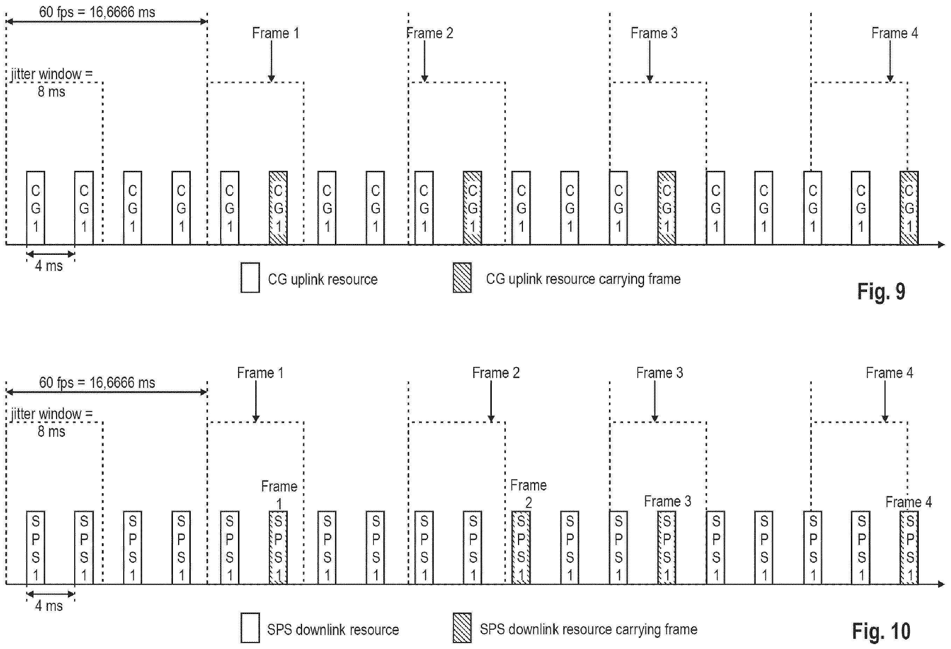

Fig. 9 illustrates such an exemplary scenario, which avoids dynamic scheduling, as an alternative to the SR-scenario of Fig. 8. For ease of illustration and understanding, similar assumptions are made as for Fig. 8, including a jitter window of 8 ms, a periodicity of the CG uplink resources of 4ms. Fig. 9 illustrates the over-provision, to the UE, of CG uplink resources for transmitting in the uplink a video stream with 60 fps. The UE at least at its application is aware of when the jitter window occurs. Fig. 9 illustrates how four video frames arrive at different times within the respective jitter windows and are then transmitted by available CG uplink resources, within and outside the jitter window. The unused CG uplink resources are illustrated with empty boxes, while CG uplink resources used for transmitting video frames are illustrated with striped boxes.

As also apparent from Fig. 9, it is exemplary assumed that there is only one active CG configuration, here having a periodicity of 4 ms. The periodicity of the CG uplink resources (4 ms) and the video frames (16,6666 ms) do not coincide and result in a relative shift of the occurrence of the CG uplink resources with respect to the jitter window, within which the video frames are generated.

In order to avoid a long latency, sufficient opportunities are provided for the UE to transmit a video frame as early as possible. In the present example, a configured uplink grant with a periodicity of 4ms is assumed. While the over-provision of CG resources can, as illustrated in Fig. 9, achieve a low latency, it results in a low resource utilization.

Moreover, **Fig**. **10** illustrates the over-provision of SPS downlink resources for the UE to be able to receive a video stream, in this case also at 60 fps. For ease of illustration, similar assumptions are made as done for Fig. 9, including a jitter window of 8 ms and a periodicity of the SPS downlink resources of 4ms. Fig. 10 again illustrates the arrivals of Frame 1-4 at the base station. From UE perspective, the UE is not necessarily aware of the locations of the jitter windows and also not when the video frames are generated at the base station. Rather, the UE periodically monitors all the periodic downlink resources according to the illustrated SPS configuration and will be able to receive the XR video Frame 1-4 illustrated in Fig. 10. As also apparent from Fig. 10, the video frames, although arriving (e.g. being generated) at the base station within the jitter windows, can be transmitted by the base station outside the jitter windows.

XR and video streams are however only particular exemplary scenarios for which the above disadvantages exist. There are other scenarios too. Consequently, the present invention and its solutions do not only apply to XR and video streams.

### Embodiments

The inventors have thus identified the possibility of providing improved procedures, for allowing to avoid one or more of the above described disadvantages. The present invention relates to different solutions and variants for such an improved procedure. Accordingly, the present disclosure provides techniques for increasing the efficiency of resource usage, in particular in scenarios with periodic traffic, such as XR traffic. In particular, techniques are disclosed that allow supporting non-integer periodicities more efficiently.

The present disclosure in particular provides a scheduling devices, corresponding methods for scheduling devices, user equipments, corresponding methods for user equipments, communications systems comprising such scheduling devices and user equipments, as well integrated circuits which, in operation, control a processes of scheduling devices/user equipment to perform the respective methods.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

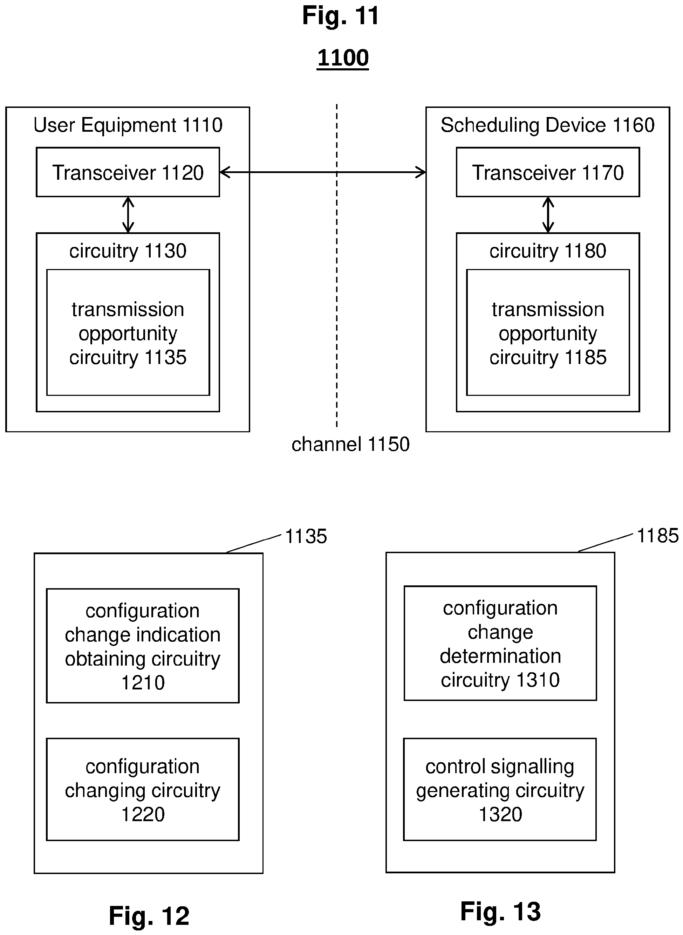

As already mentioned above, the present disclosure provides a base station and a user equipment. The present disclosure further provides a system including a scheduled and scheduling device, as well as a corresponding methods and programs. An example of such communication system is illustrated in Fig. 11. The communication system 1100 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

Fig. 11 illustrates a general, simplified and exemplary block diagram of a communication device 1110 (here exemplarily assumed to be a UE) and a scheduling device 1160 (here exemplarily assumed to be located in the base station, e.g. the LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 1110 may also be a sensor device, a wearable device, or a connected vehicle, or a controller of an automated machine in an industrial factory. Further, a communication device 1110 may be able to function as a relay between a base station and another communication device (e.g. the disclosure is not limited to communication "terminals" or user "terminals"). As illustrated in Fig. 11, the communication device 1110 and the scheduling device 1160 (eNB/gNB) may communicate with each other over a (wireless) physical channel 1150 respectively using their transceivers 1120 (UE side) and 1170 (base station side). Together, the scheduling device 1160 and the terminal 1110 form the communication system 1100. The communication system 1100 may further include other entities such as those shown in Fig. 1. Communication between the communication device (UE) and the scheduling device (base station) is typically standardized and may be defined by different layers, such as PHY, MAC, RRC etc. (see above background discussion).

As illustrated in Fig. 11 (left-hand side), a communication device may comprise a transceiver and circuitry (or processing circuitry), and a scheduling device may comprise a transceiver and a (processing) circuitry. The ***transceiver*** in turn may comprise and/or function as a receiver and a transmitter. In this disclosure, in other words, the term "***transceiver***" is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc. The transmitter may be responsible for performing the process of transmitting and other processes related thereto. The receiver may be responsible for performing the process of receiving and other processes related thereto, such as monitoring a channel. A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 1110 (e.g. a UE) as e.g. illustrated in **Fig. 11** is provided. The communication device 1110 comprises a transceiver 1120 and circuitry (or processing circuitry) 1130. The circuity 1130, in operation, (i) obtains (e.g. by extracting and/or parsing) from control signalling a configuration change indication, and (ii) changes the configuration of the transmission opportunities by applying the indicated change. The transceiver, in operation, (i) receives the control signalling, and (ii) receives or transmits a (or more) transmission using one (or more) the transmission opportunities of the changed configuration.

It is noted that the circuitry 1130 may implement more functionality than the above-mentioned obtaining and changing, as it may, for instance, further control the transceiver 1120 to receive the control signalling and/or to receive or transmit data. Thus, the circuitry 1130 is exemplarily considered to include transmission opportunity circuitry 1135, which is configured to perform said obtaining and changing. The configuration may be provided by hardware adaption and/or by software.

**Fig. 12** shows an exemplary functional structure of the transmission opportunity circuitry 1135. In particular, the transmission opportunity circuitry 1135 may include configuration change indication obtaining circuitry 1210, which may obtain the configuration change indication from the control signaling; and configuration changing circuitry 1220, which may apply the indicated configuration change to the transmission opportunities (or change the configuration of transmission opportunities in accordance with the configuration change indication). It is noted that the transmission opportunity circuitry 1135 may also implement more functionality, as it may, for instance, also responsible for determining new transmission opportunities (and not just be responsible for changing already configured transmission opportunities).

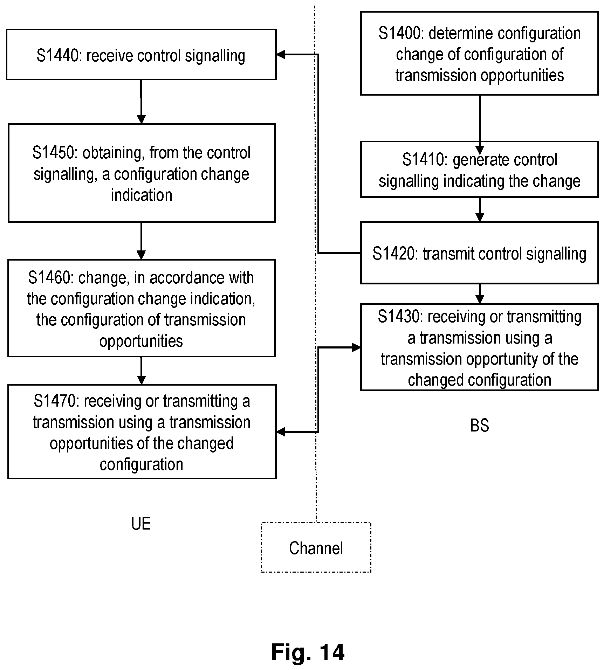

In correspondence with the above described communication device, a communication method to be performed by a communication device is provided. As shown in **Fig. 14**, the method comprises a step of (i) receiving S1440 control signalling; (ii) obtaining S1450, from the control signalling a configuration change indication; (iii) changing S1460 the configuration of the transmission opportunities by applying the indicated change; and (iv) receiving or transmitting S1470 a (or more) transmission using one (or more) of the transmission opportunities of the changed configuration.

As also shown in **Fig. 11** (right-hand side), according to another exemplary embodiment, a scheduling device 1160 is provided. The scheduling device 1160 comprises a transceiver 1170 and a (or processing circuitry) circuitry 1180. The circuitry 1180, in operation, determines a change of a configuration of transmission opportunities of a resource configuration, and generates a control signalling including an indication indicating the change. The transceiver 1170, in operation, (i) transmits the control signalling, and (ii) receives or transmits a (or more) transmission using one (or more) of the transmission opportunities of the changed configuration. It is noted that circuitry 1180 may implement more functionality than the above-mentioned determining and generating, as it may, for instance, further control the transceiver 1170 to transmit the control signalling and/or to receive or transmit data. Thus, the circuitry 1180 is exemplarily considered to include transmission opportunity circuitry 1185, which is configured to perform said determining and generating. The configuration may be provided by hardware adaption and/or by software.

An exemplary functional structure of the transmission opportunity circuitry 1185 is shown in **Fig. 13****.** In particular, the transmission opportunity circuitry 1185 may include configuration change determination circuitry 1310, which may determine the configuration change; and control signalling generating circuitry 1330, which may generate the control signalling indicating the configuration change (e.g. by including a configuration change indication). It is noted that the scheduling circuitry 1135 may also implement more functionality, as it may, for instance also be responsible for determining new transmission opportunities (and not just be responsible for determining whether and/or how to change already configured transmission opportunities)

Furthermore, in correspondence with the above described scheduling device, a communication method to be performed by a scheduling device is provided. As shown in **Fig. 14**, the method comprises (i) a step of determining S1400 a change of a configuration of transmission opportunities of a resource configuration; (ii) a step of generating S1410 a control signalling including an indication indicating the change; (iii) a step of S1420 of transmitting the control signalling; and (iv) a step of receiving or transmitting S1430 a (or more) transmission using one (or more) of the transmission opportunities of the changed configuration.

Moreover it is noted that, since the present disclosure relates to resource usage and scheduling, both entities, a scheduled device (typically communication device/transceiver device) and scheduling device (typically network node) take part. Thus, in the further description, the details and embodiments apply to (and may be implemented by them) each of the communication device, the scheduling device (or scheduling nodes) and the methods unless explicit statement or context indicates otherwise. In particular, any of the steps/operations described below may be performed or controlled by the circuitry 1130 (on the UE side) and/or the circuitry 1180 (on the base station side). Furthermore, any reception and transmission steps may be performed by the transceiver 1120 (on the UE side) and/or the transceiver circuitry 1170 (on the base station side) (e.g. by being controlled by the respective circuitry to do so).

### Transmission Opportunities

Firstly, it is noted that the term *"transmission opportunity*" is not limited to a particular direction of the transmission (Uplink/Downlink/Sidelink). In other words, a transmission opportunity may be (for a given device) an opportunity to receive or transmit data (e.g. control signalling as usually for SR, and/or payload as usually for CG/SPS). Accordingly, the UE and the scheduling device may receive or transmit data in step S1470 and S1430, respectively (if they are communicating with each other, one of them is receiving and one of them is transmitting). It is worth noting noted that in case of SR, the transmission opportunities are used for requesting uplink resources. In other words, the transmission opportunities used for transmissions of the periodic traffic are used for transmitting control information/signalling of the periodic traffic, and not for transmitting data of the periodic traffic.

Furthermore, it is noted that *transmission opportunity* in general refers to time-frequency resources reserved for transmission/reception of the respective and that the respective device may use (in case of reception, more precisely, should monitor). In general, transmission opportunities correspond to resources of the resource configuration.

Moreover, as indicated by the word "*opportunity*", a *transmission opportunity* may not actually be used for a transmission. In particular, not in general only some (e.g., one or more) of the transmission opportunities are used, but not necessarily all are used. For instance, as explained above with respect to XR-traffic, the next transmission may not be ready when a certain transmission opportunity occurs, and a later transmission opportunity, preferably in the same jitter window may be used. If the transmission opportunities are opportunities to receive transmissions, a transmission opportunity corresponds to time-frequency resources in which a transmission may be received and which are thus monitored.

### Resource configuration

In general, the term *"resource configuration"* refers to a plurality of time frequency resources with which the communication device 1110 is configured. A UE may be considered to be configured with a resource configuration if knows the resources of said resource configuration (e.g. the UE may have been informed of the parameters of the pattern underlying the resources of the resource configuration). In general, the UE may be configured with the resource configuration via control signalling received from the scheduling device. This may be the same control signalling including the configuration change indication or another control signalling. Such a control signalling would include an indication of the resources (e.g. time-frequency resources) of the resource configuration. In particular, the control signaling including the configuration change indication may be an RRC signalling including an indication of the resource configuration and/or in particular including a an indication indicating the resources of the resource configuration. For instance, if the resource configuration is a CG configuration, an SPS configuration or an SR configuration, the control signaling including the configuration change indication may be the RRC configuring the CG configuration, a SPS configuration or a SR configuration, respectively. This applies in particular to the case that the configuration change indication is an indication of a validity time (further explained below), in which case the resources and the validity time of the transmission opportunities of the resource configuration would be configured together. In other words, the validity time could be configured by RRC as a part of the SPS/CG/CG configuration(s) (to which the validity time applies).

The resources of the resource configuration (i.e. the resources the resource configuration specifies) may be given in terms of a certain pattern that may repeats itself in time-domain. For instance, the resources may be uniformly spaced in time-domain: each two directly successive (in time-domain) resources may be separated by the same time-distance, so that the resources may be given/specified/indicated by one time reference point, a common length/duration of all resources, and said same time distance (some of the these three parameters may be predefined/predetermined/preconfigured, so that no explicit signalling may be necessary when configuring the UE with a resource configuration). For instance, the resource configuration may be a CG configuration, a SPS configuration or a SR configuration. In other words, the resources of the resource configuration may be the resources of CG configuration, a SPS configuration or a SR configuration.

It is noted that the resources of a resource configuration may correspond to respective transmission opportunities. These are here also referred to as the transmission opportunities of the resource configuration. If resources of a resource configuration correspond to transmission opportunity, the resources are assigned to the UE, and (i) the UE may use them to transmit data or control information (e.g. scheduling requests as in case of a SR configuration), or (ii) the UE may be supposed to monitor these resources as it may receive a transmission in these resources.

However, (all, some or none) resources specified/defined by a resource configuration may not correspond to a respective transmission opportunity. For instance, a resource configuration may be deactivated, so that none of the resources corresponds to a transmission opportunity. While the resource configuration or the corresponding transmission opportunities are deactivated, the UE main remain configured with the resource configuration, which may allow fast activation of corresponding transmission opportunities.

### Control signalling

In general, the control signalling including the configuration change indication may be a downlink control signalling (DCI), a radio resource control (RRC) message, or some different control signalling.

### Configuration Change

It is to be noted that the term *"Configuration Change"* refers to a change of the configuration of the transmissions opportunities of the resource configuration (i.e., refers to a change of said transmission opportunities). The configuration change thus includes a change of the resource configuration, i.e. of the resources of the resource configuration, but is not limited thereto. As already explained above, resources of the resource configuration do not necessarily correspond to a transmission opportunity, e.g. if said resources and/ or if the entire resource configuration is deactivated. A change of the configuration of the transmission opportunities may thus also take place when the resources/transmission opportunities are activated or deactivated. In general, a configuration change may thus be a change of
(i) the configured resources (e.g. by changing resource parameters), and/or
(ii) an activation/deactivation of the resource configuration.

### Configuration Change Indication

The term *"configuration change indication"* refers to an indication indicating a change of a configuration of the transmission opportunities of a resource configuration, i.e. refers to an indication indicating a change of the transmission opportunities. The "***configuration of the transmission opportunities***" thus refers to the plurality of transmission opportunities, which may be changed by (a) changing the resources of transmission opportunities and/or (b) by removing/adding transmission opportunities by activating/deactivating resources of the resource configuration (and thus activating/deactivating the transmission opportunities corresponding to the activated/deactivated resources, thereby adding/removing them from the plurality of transmission opportunities). In general, a configuration change indication may thus be an indication of:
(i) a change of the resources of the resource configuration,
(ii) an activation/deactivation of the resource configuration, and/or
(iii) an indication of a validity time.

In other words, regarding (ii) and (iii), the configuration change indication may thus also be an indication of a change of the activation status of the resource configuration.

Regarding the case that the configuration change indication is an indication of a validity time (above point (iii)), it is to be noted that such indication is also an indication of an activation/deactivation of the resource configuration (above point (ii)). However, the above point (ii) refers to an indication to activate or deactivate resource configuration (e.g. in direct response to the configuration change indication). As further discussed below, the change indicated by the validity time is the change (i.e. the deactivation) of the transmission opportunities after an (i.e. any/each) activation of the transmission opportunities once the validity time has passed (since the respective activation). In other words, the indication of the validity time indicates that the transmission opportunities are to be changed (i.e. deactivated, become invalid) once the validity time has passed since activation. Put differently, the indication validity time changes, in case of an activation, the transmission opportunities with respect to the transmission opportunities the UE would have had without the indicated validity time.

Furthermore, it is to be noted that the configuration change indication may not be (but can be) an indication of a change of e.g. validity time from one already set value to another value indicated by the configuration change indication: the configuration change indication may also be the initial setting of the validity time.

Thus, secondly, it is first to be noted that, in the above cases (i) and (iii), the configuration change indication itself (or alone) may usually not change the transmission opportunities of the UE. More specifically, in these cases the transmission opportunities usually only change when/once the resource configuration is active/enabled. Thus, only together with an activation of the resource configuration, a validity time and/or a change of the resources leads to a change of transmission opportunities.

The *"transmission opportunities of the changed configuration"* are thus the transmission opportunities corresponding to the resources that are (i) changed in accordance with the configuration change indication (if the configuration change indication indicates a change of the resources, otherwise the resources remain unchanged) and (ii) are within the validity time since the last activation (if a validity time has been configured by the configuration change indication or by other signalling).

### Configuration Change Indication - Change of Resources

As already mentioned above, in general the configuration change indication may be an indication of a change of the resources of the resource configuration: In particular, the configuration change indication may be an indication of:
(i) a value of a parameter of the resource configuration,
(ii) a time offset to be applied to the resources of the resource configuration,
(iii) a frequency offset to be applied to the resources of the resource configuration,
(iv) a change of a periodicity of the resources of the configuration, and/or
(v) a modulation and coding scheme (MCS) index (e.g. to be used for transmissions using the resources and transmission opportunities of the resource configurations).

The UE (e.g. its circuitry 1130) would then obtain this indication form the control signalling and change the transmission opportunities respectively by changing the resources of the configuration by:
- updating the parameter of the configuration to the indicated value,
- applying the time offset to the resources of the configuration,
- applying the frequency offset to the resources of the configuration,
- updating the periodicity of the resources of the configuration, and/or
- updating an MCS index of the configuration to the indicated MCS index.

More specifically, the time offset would be applied to the resources of the resource configuration e.g. by adding the (positive or negative) offset to the time of each resource of the resource configuration. Furthermore, the frequency offset would be applied to the resources of the resource configuration e.g. by adding the (positive or negative) offset to the frequency of each resource of the resource configuration. For instance, a positive/negative time allocation offset (e.g., slot/mini-slot/symbol) and/or a positive/negative frequency offset (e.g., RE) could be indicated by the control signalling and applied by the UE to the existing allocation offsets for the SPS/CG/SR configuration. In other words, the positive/negative frequency offset (e.g., RE) may be applied to the existing frequency domain allocations for the SPS/CG/SR configurations. The new MCS index, indicated by the configuration change indication, could e.g. replace the existing (i.e. the current) MCS of the SPS/CG configurations.

### Indication of a change of a periodicity

In general, a resource configuration may have a certain periodicity. More specifically, as in the case of e.g. CG/SPS/SR configurations, the resources of a resource configuration may have a certain periodicity. For instance, each two consecutive (e.g. directly successive) resources of the resource configuration may be separated (in time-domain) by a same time distance. Such time distance may e.g. be the time between the start times of two consecutive resources, the time between the end of the first resource time to the start of the second resource (first and second resource in time-order), or the time between the two end times of the resources. In other words, the resource may be equally or uniformly spaced in time domain. The resources may thus be (e.g. completely) specified, in time domain, by one time point and said time distance. More specifically, in general the time instance for a resource (and/or the indicated transmission times) may be given according to t + *n* ∗ *x*; *n* ={0,1,2,..}, where "*" denotes multiplication, t is an offset value in time domain, changing the beginning of the resources, for instance from the beginning of a frame, x is the *"same time distance"* by which the resources are separated, and *n* is a label for resources ordered in time (i.e., the (n+1)-th resource time would be *t* + *n* ∗ *x*)*.* Accordingly, the values of t and/or x could be indicated by the control signalling that configures the resource configuration. The unit of t and/or x (slots, ms, frames, etc) could also be indicated or be predetermined and/or predetermined.

An indication of a change of the ***periodicity*** or ***occurrence frequency*** of the resource configuration may thus be an indication of a change of the time between two resources of the resource configuration. For instance the indication could be an indication of a new value for said variable x, which would then e.g. be used to determine the resources as of a certain time. The indication may also be an indication of the number of transmissions in/per a certain time interval (e.g. the number of transmissions per second).

### Changing (S1470) of transmission opportunities and generation of signalling (S1410)

Regarding determination of the transmission opportunities by the scheduling device in step S1400 and the change of the transmission opportunities by the UE in accordance with the configuration change indication in step S1460, it is noted that, since the UE and the scheduling device form a communication system both steps should generally yield the same result (i.e. the same transmission opportunities). In other words, both devices should be aware of the same transmission opportunities.

However, the determination of the UE may differ from the determination of the scheduling device in several respects. Firstly, the determination of the scheduling device may be the step in which the opportunities are set (e.g. in which it is determined that and/how the transmission opportunities are to be changed, whereas the UE generally only infers the transmission opportunities determined/changed by the scheduling device. Secondly, the determination of the scheduling device may thus take into account other/additional parameters such as available resources, quality of service, requests from UEs, received channel state information, traffic loads, battery status of UEs, and the like. Some - but usually not all - of these parameters may be known to the UE, or may even be indicated, via a transmission by the UE to the scheduling device.

In particular, the scheduling device may try to optimize all these parameters and to find based on all of this the most suitable transmission opportunities. Thus, in general, the scheduling device is the one deciding the transmission opportunities in its determination, whereas the UE usually only determines/infers the transmission opportunities set by the base station. The change applied by the UE is based on the control signalling obtained by the UE from the control signalling in step S1450.

Since the result of the changing S1460 of the UE should yield the same result as the determination of the scheduling device, the methods according to the present disclosure in general apply to the UE and the base station side (network node, scheduling device). However, the particular configuration change indications disclosed herein concern the base station in a different way: the base station has to generate (step S1410) the control signalling such that the UE can/will determine the intended/correct transmission opportunities based on the generated control signalling. Thus, the generated control signalling should allow the UE to determine the correct transmission opportunities. In other words, the determination of the transmission opportunities by the UE directly corresponds to the generation of the control signalling by the scheduling device.

### Configuration Groups

In general, a UE may be configured with one or more configuration groups. As already mentioned above, a UE can be configured (e.g. by RRC) with several SPS/CG/SR configurations. More specifically, the term *"configuration group"* thus refers to a plurality of resource configurations that are grouped or linked together. In other words, each configuration group comprises a plurality of resource configurations. The resource configurations of a particular configuration may in general be of the same type, e.g. may all be CG configurations, may all be SPS configurations, or may all be SR configurations.

Configuration groups may be configured e.g. via RRC, DCI, and/or other control signalling. Such control signalling configuring the UE with one or more configuration groups is here referred to as *"configuration group control signalling".* In general, the configuration group control signalling includes an indication indicating which resource configurations are in the configuration group of the resource configuration. Accordingly, the UE could obtain such indication from the configuration group control signalling. In general, the configuration group control signalling could be a different control signalling than (i) the control signalling configuring the resource configurations and/or (ii) the control signalling indicating the configuration change. However, the present invention is not limited to any particular scenario. Any two or more of these control signallings or could be part of the same control signalling.

The configuration group control signalling may also indicate (e.g. include an indication indicating) that changes to the configuration of transmission opportunities of one (any one) of the resource configurations of the configuration group are to be applied to transmission opportunities of the other resource configurations of the configuration group (as well). In other words, the configuration group control signalling may indicate that any change to a member of the configuration group applies to each member of the configuration group.

For instance, the UE could receive a control signalling indicating (i) which (already configured) resource configurations form a configuration group, and/or (ii) that a particular resource configurations form a configuration group (i.e. specifying a configuration group). There could also be control signalling adding and/or removing resource configurations to or from configuration groups. By assigning several resource configurations (e.g. SPS/CG/SR configurations) to a same configuration group, these several resource configurations could be linked to each other.

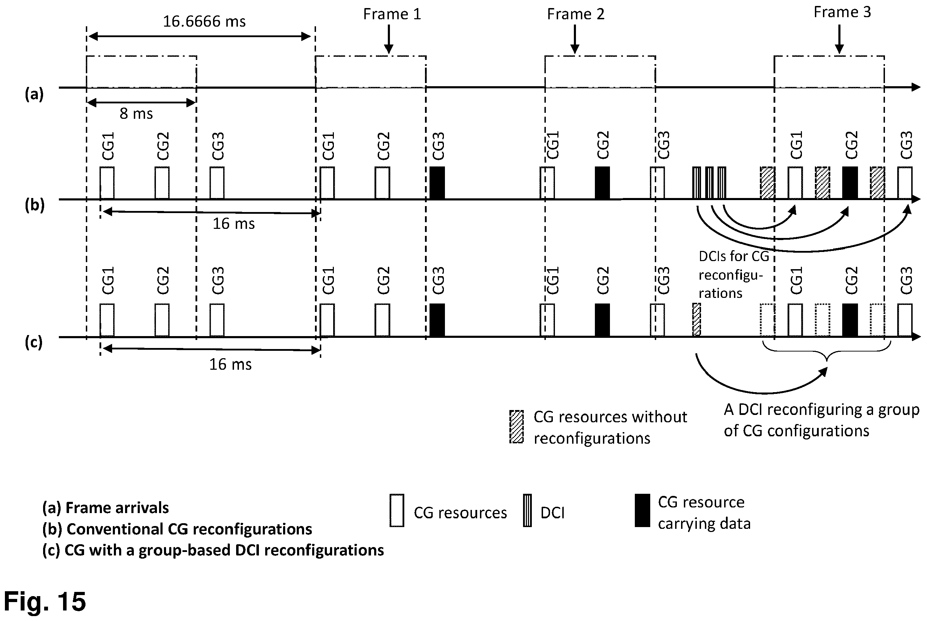

Configuration groups allow applying the same configuration change to multiple resource configuration (e.g. all configuration in the same group) at once, without the need to indicate the configuration change for each resource configuration in the configuration group separately. In other words, when a configuration parameter of one of SPS/CG/SR is changed, the change is also applied to other linked SPS/CG/SR configurations (i.e. to the change is applied to each resource configuration in the same configuration group). For instance, a DCI may be sent to reconfigure several SPS/CG/SR configurations simultaneously. This may be faster and/or have less delay than other signalling types. Such a DCI, here also referred to as "***group-based DCI***" may e.g. contain an indication of (i) a value of a parameter of the configuration, (ii) a positive or negative time allocation offset (e.g., slot/mini-slot/symbol), (iii) a positive or negative frequency offset, (iv) a change of a periodicity of the resources of the configuration, and/or (v) a new MCS index. These SPS/CG/SR-group-based indicated new parameters may be applied to the group of SPS/CG/SR configurations. As further explained below with respect to Fig. 15, a time offset may e.g. be used to compensate a drift between CG resources and the jitter windows of non-integer periodic traffic and has the benefit reducing the signaling overhead in comparison to individual DCI for each resource configuration or the configuration group.

In general, the control signalling indicating the configuration change may also indicate that the configuration change indication applies to each resource configuration in the configuration group of the resource configuration. In other words, said control signalling may indicate whether or not it is a group signalling, e.g. may indicate whether or not DCI is group-DCI that applies to each resource configuration in the configuration group (of the resource configuration explicitly indicated by the DCI). The control signalling indicating the configuration may in general also include an indication of a group ID of the configuration group to which the configuration change applies. This may be the case in particular if resource configurations can be in multiple (i.e. more than one) configuration groups.

More specifically, if a configuration change indication indicates a change of the transmission opportunities of a particular resource configuration, said change could be applied (by the UE, in the changing S1460) also to configurations of transmission opportunities of other resource configurations of said group. The *"other resource configurations"* here refer to the resource configurations in the configuration group other than said particular resource configuration. In other words, the indicated change would be applied to each configuration of transmission opportunities in the group of said particular resource configuration (explicitly indicated). Thus, the transmission opportunities of each resource configuration in the configuration group is changed in accordance with the configuration change indication.

Furthermore, in general, a resource configuration may also be part of (i.e. be included in) more than one of the configuration groups. In such a case, the configuration change indication may include an indication of one or more of the configuration groups to which the configuration change indication applies. The UE then applies the change configuration to each resource configuration that is at least in one indicated configuration group.

**Fig. 15** illustrates an example for reducing the overhead when using configuration groups and a group-based DCI: A UE is configured with three different CG configurations, CG1, CG2 and CG3 e.g. for a video stream with 60 fps (corresponding to a periodicity of 50/3 ms=16.66667 ms). The periodicity of each CG configurations is 16 ms. Row (a) of Fig. 15 shows the arrival of frames over a jitter window of 8 ms at the UE side. Due to the non-integer periodicity of the video stream (with the average periodicity of 1/60 fps≈16.6666 ms), the video stream and the CG resources have different periodicities and there is a relative drift between CG resources and jitter windows. Without configuration groups, in order to compensate this drift, the CG configurations would have to be reconfigured by sending separate DCIs, as shown in row (b) of Fig. 15. Instead, using configuration groups, a group-based DCI can be used to reconfigure the three CG configurations simultaneously, as shown in row (c) of Fig. 15Figure. Here the sent DCI is used to adjust the time offset of CG configurations.

### Configuration Change Indication - Activation/Deactivation of Resource Configuration(s)

As already mentioned above, the configuration change indication may in general be (or include) an indication to activate or deactivate the transmission opportunities of the resource configuration. More specifically, if the configuration change indication is an indication to activate the transmission opportunities of a resource configuration, the UE may activate the transmission opportunities of resource configurations in the configuration group of the resource configuration; and (ii) if the indication indicating the change is an indication to deactivate the transmission opportunities of the resource configuration, the UE may deactivate the transmission opportunities of resource configurations in the configuration group of the resource configuration. *"Deactivate"* or *"release"* here means that the corresponding transmission opportunities may no longer be used by the UE (or may no longer to be monitored by the UE in case of e.g. SPS). The transmission opportunities are thus disabled and ceased to be transmission opportunities (i.e. they become invalid). Correspondingly, *"activate"* means that the resources of a resource configuration become valid and that UE may now use them (or is now supposed to monitor them in case of e.g. SPS). Accordingly, the enabled resources of the resource configuration now correspond to transmission opportunities. It is further noted that there may be a predetermined/preconfigured or indicated time duration between the reception of the signalling indicating the activation/deactivation and the time as of which the activation/deactivation applies.

It is noted that the indication to activate or deactivate transmission opportunities may in general also be used without configuration groups. However, it may be particularly advantageous to group e.g. several SPS/CG/SR configurations together, as explained above, and send a group-DCI to activate/release the group of SPS/CG/SR configurations (i.e., each of them).

Regarding the case that a configuration is included in more than one configuration group, as already mentioned above, the configuration change indication may indicate, to the UE, the configuration group(s) to which it applies. Then, if the configuration change indication is an indication to activate transmission opportunities, the UE may (i) activate transmission opportunities of resource configurations in said indicated configuration group(s), and (ii) does not activate transmission opportunities of resource configurations not included in the indicated said configuration group(s). In other words, the UE may activate only the resource configuration in the indicated configuration group(s). Correspondingly, if in such a case the configuration change indication is an indication to deactivate transmission opportunities, the UE may (i) deactivate transmission opportunities of resource configurations in the indicated one configuration group(s), and (ii) not deactivate transmission opportunities of resource configurations not included in the indicated configuration group(s).

### Automatic Deactivation

In general, a UE may be configured to have resource configurations of at most one of the resource configurations active at a time (i.e. at any given time, e.g. until this configuration is revoked). When such a UE then receives an indication to activate a particular resource configuration, it may activates said particular resource configuration and deactivate the other resource configurations. For instance, a DCI may activate one of SPS/CG/SR configurations and release the rest of the SPS/CG/SR configurations. However, the present invention is not limited thereto, as in general a UE may also be configured to only have a certain number (which may be 1 but may also be an integer larger than 1) of resource configurations active at a given time. Then, if the UE receives an indication to activate one or more resource configurations, the UE would activate these indicated one or more resource configurations and deactivate resource configurations, so that the configured maximum number of active resource configurations is not exceeded. The deactivated resource configurations could e.g. be the resource configurations that have been activate for the longest time among the currently active resource configurations.

Furthermore, if a UE is configured with configuration groups, a UE may also be configured to have resource configurations of at most one of the its configured configuration groups active at a given time. Alternatively, if a UE is with configured configuration groups, a UE may be configured to have resource configurations of at most one of a particular subset of its configured configuration groups active at a given. If in such a case the UE receives an indication to activate the transmission opportunities of a resource configuration (i.e. the configuration change indication is an indication to activate the transmission opportunities of said resource configuration), the UE may deactivate the transmission opportunities of resource configurations that are not in the configuration group of the resource configuration. The UE also activates the transmission opportunities of the resource configurations in the configuration group of the indicated resource configuration (if they are not already active).

Regarding the case that resource configurations may be part of more than one configuration group, the configuration change indication may indicate, to the UE, the configuration group to which it applies. Then, if the configuration change indication is an indication to activate, the UE may:
(i) activate transmission opportunities of resource configurations in said indicated configuration group(s), and
(ii) deactivate the transmission opportunities of resource configurations that are not said indicated configuration group(s).

In other words, if resource configuration can be part of more than one group, only resource configurations of a (e.g. a single, one) group may be activated and the rest of resource configurations, not in said group, may be released.

Furthermore, if a UE is configured with configuration groups, a UE may also be configured to only have a certain number (which may be 1 but may also be an integer larger than 1) of configuration group active at a given time. Then, if the UE receives an indication to activate one or more configuration groups, the UE would (i) activate the resource configurations of these indicated one or more configuration groups (if they are not already active), and (ii) deactivate resource configurations of configuration groups, so that the configured maximum number of active configuration groups is not exceeded. The deactivated resource configurations could e.g. be the configuration groups that have been activate for the longest time among the currently active configuration groups. If a certain configuration group is deactivated, in general only resource configurations of that certain configuration groups are deactivated that are not in any other remaining active configuration group.

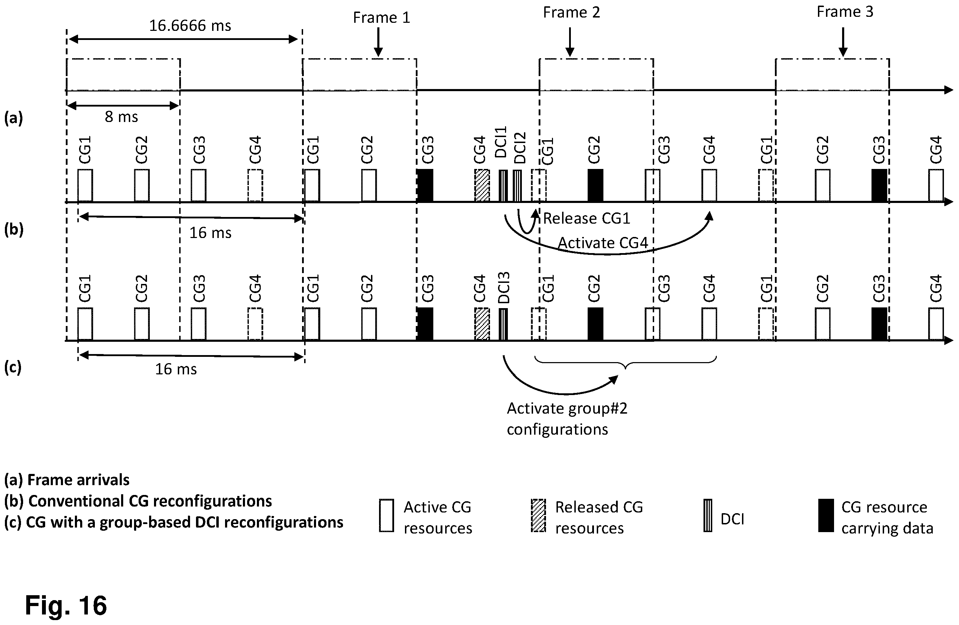

The advantages of an automatic deactivation are now illustrated with reference to Fig. 16. In the example of Fig. 16, a UE is exemplarily assumed to be configured with 4 CG configurations for a video stream with 60 fps, denoted as CG1 to CG4. The CG configurations are grouped as follows:
CG group 1: {CG1, CG2, CG3},
CG group 2: {CG2, CG3, CG4},
CG group 3: {CG3, CG4, CG1}, and
CG group 4: {CG4, CG1, CG2}.

In other words, the UE is configured with four these configuration groups, denoted CG group 1 to CG group 4. It is assumed that, at the beginning of the present example, the only active group is CG group 1.

Row (a) of Fig. 16 illustrates the frame arrivals over a jitter window at the UE side. As can be seen in row (b) and (c) of Fig. 16, as of Frame 2, the resource configuration CG1 begins to drift out of the jitter window. Furthermore, resource configuration CG4 is drifting closer to the jitter window. Thus, the base station sends signalling to activate resource configuration CG4 and to deactivate resource configuration CG1.

Row (b) of Fig. 16 illustrates the conventional DCI transmissions for activating/releasing CG configurations without usage of automatic deactivation and groups. As can be seen, two DCIs are sent, one to activate CG4 (i.e. DCI1) and one to release CG1 (i.e. DCI2).

In row (c) of Fig. 16, it is further assumed that the UE is configured to have only (or maximal) one of the four configuration groups active at a given time. In other words, the UE also is configured to have a single active CG group at a time. Thus, when a DCI indicates an active CG group (i.e. to activate a group), all the CG configuration members of this CG group become active, while the rest of CG configurations are released (i.e. automatic deactivation is used). The UE thus deactivates, when receiving an indication to activate a configuration group, all configuration groups other than the one to be activated. Thus, in Fig. 16, the base station sends signalling, e.g. a DCI, to activate CG group 4 (and thus CG4 configuration 4, which is part of CG group 4), and to deactivate CG group 1 (which includes CG4 configuration 1). As can be seen, one DCI (i.e. DCI3) is sent to activate the CG group#2, which activates CG2, CG3, and CG4. Furthermore, DCI3 also releases CG1 (without further signalling). The benefit of group-based configuration and automatic deactivation is the reduced signaling overhead.

Furthermore, it is noted that the signalling overhead may also be reduced by configuring the UE to have maximal three of the four resource configuration active, and to indicate with the DCI3 the UE to activate CG4. To not exceed this maximum of three active resource configurations, the UE may then deactivate resource configuration CG1 e.g. since CG1 has been active the longest among the resource configurations (alternatively linking as explained below may also be used).

### Configuration Change Indication - Validity Time

As already mentioned above, in general, the transmission opportunities may be changed based on a validity time. Accordingly, the configuration change indication may be an indication of a validity time. The validity time may e.g. be configured through RRC as a part of SPS/CG/SR config or indicated through a DCI. In other words, the control signalling indicating the validity time may be a DCI or a RRC signalling. In general, a validity time may be defined/indicated for a (one) resource configuration or a group of resource configurations.

It is noted that the term *"validity time", "validity timer",* or *"validity duration"* refers e.g. to a time duration transmission opportunities of the resource configuration are valid after activation of the resource configuration. In other words, the validity time indicates or corresponds to the duration that the resources of the resource configuration(s) are valid after an activation. For instance, a validity time can be defined for a SPS/CG/SR configuration or a group of them indicating the duration that the SPS/CG/SR resources are valid after activation. More specifically, if a UE receives an *activation control signalling* (i.e. a control signalling indicating activation of a resource configuration or a group of resource configuration; this *activation control signalling* may be a configuration change indication indicating an activation as discussed above), the UE (e.g. its circuitry) may
(i) obtain, from the activation control signalling the indication to activate the resource configuration (or the group of resource configuration); and
(ii) activate transmission opportunities of the resource configuration that are within a time interval with a length corresponding to the validity time.

In other words, the validity time may prevent activation of transmission opportunities of the resource configuration(s) that are not within the validity time (from start of the activation). Thus, only the transmission opportunities that are within the interval given by the activation and the validity time are activated.

The validity time may be indicated or given in terms of the number of transmission opportunities that is provided to the UE for each activation of the resource configuration. In other words, validity duration could be indicated as the number of resource occasions an activation of the resource configuration provides to the UE. However, the present invention is not limited thereto as in general the validity time may also be given/specified/indicated as a time duration. For instance, the validity duration could be indicated according to the time unit (e.g., in ms, frame, slot, mini-slot, symbol).

The validity time may be indicated together with the *activation control signalling* or be a separate signalling. In other words, a configuration change indication may include both (i) an indication to activate a resource configuration or a group of resource configurations, and (ii) an indication of the validity time corresponding to this activation. Such a combined or even joint indication may increase the flexibility as for each activation a different validity time can easily be indicated.

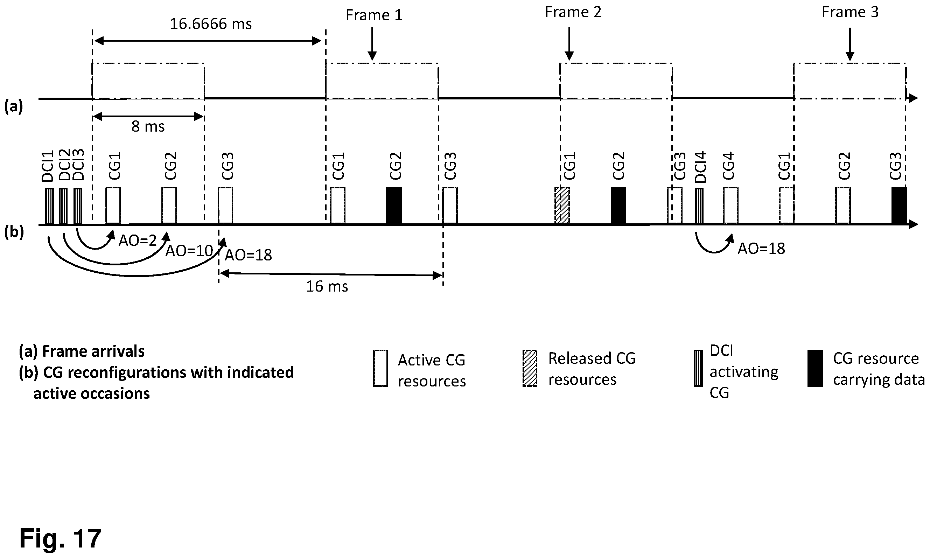

Usage of a validity time may avoid the need for sending an explicit release DCI signal as further illustrated with reference to **Fig. 17****.** More specifically, row (a) of Fig. 17 illustrates the frame arrivals of a video stream with 60 fps over a jitter window at the UE side.

As shown in row (b) of Fig. 17, for carrying the 60 fps video stream, the UE receives four DCIs, DCI1 to DCI4 which activate resource configurations CG1 to CG4, respectively. Each of these DCI activates the respective CG configuration and carries an indication of active occasions (AO) of the respective activation. The AO is the number of active CG resource occasions (i.e. the number of transmission opportunities activated by the respective DCI). More specifically, DCI1 activates the resource configuration CG1 for 2 transmission opportunities, DCI2 activates the resource configuration CG2 for 10 transmission opportunities, DCI3 activates the resource configuration CG4 for 18 transmission opportunities, and DCI4 activates the resource configuration CG4 for 18 transmission opportunities. As also shown in row (b), since for CG1 the indicated AO=2, the CG1 is released after two occasions. This avoids transmission of an additional DCI to release the resources of CG1, which drift out of the jitter window after Frame 1 and are, thus, may no longer be needed. For CG2, the AO=10. Thus, the CG2 will be released after 10 resource occasions.

### Linking of Resource Configurations

A resource configuration for which a validity time is defined may additionally be linked to another the resource configuration (i.e. a different resource configuration than the aforementioned resource configuration for which a validity time is defined). When the validity time of the first configuration is expired, the relevant resource are released, meanwhile, the second (linked) resource configuration is activated.

More specifically, a UE may receive a signalling, here denoted as *"resource configuration link control signalling".* The resource configuration link control signalling may be (but not necessarily is) part of the same control signalling indicating the validity time and/or a control signalling activating the resource configuration. The resource configuration link control signalling includes an indication indicating that transmission opportunities of another resource configuration are to be activated when the transmission opportunities of the resource configuration are deactivated. The UE thus activates the transmission opportunities of said other resource configuration that are after the time interval in which the transmission opportunities of the resource configuration are active.

It is noted that the second resource configuration may also have a validity time. Thus, not necessarily all transmission opportunities of the second resource configuration after the validity interval of the first configuration may be activated.

The second resource configuration may also be linked to a resource configuration. The resource configuration to which the second resource configuration is linked is may even be the first resource configuration. Alternatively, a larger cycle of three or more resource configurations could be configured, in which eventually the first resource configuration is activated again and the cycle repeats. Furthermore, it is possible to link configuration groups. For instance, there could be four configuration groups, each configured with a validity time (identical or different), the first group could be linked to the second, the second group could be linked to the third, the third group could be linked to the fourth, and the fourth group could be linked to the first group. If the first configuration group is active and its validity time expires, the first group would be (automatically/without further signalling) deactivated and the second configuration group activated. Then, after the validity time of the second group expires, the second group would be activated and the third group would be activated, the expiring of the first group would then activate the fourth, which would then activate the first group again after expiry of its timer, repeating the cycle of the four configuration group.

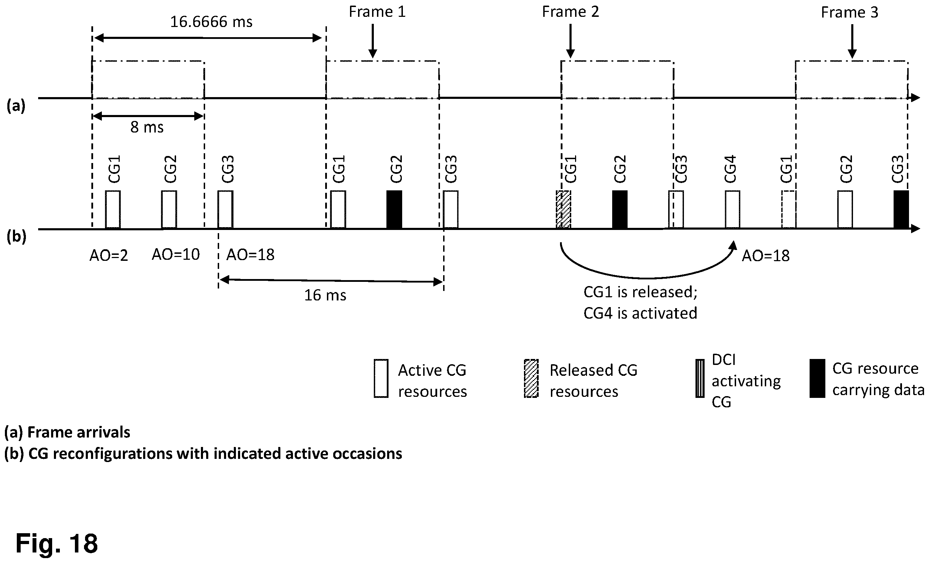

Linking of resource configurations may avoid the need for sending an explicit activation and/or release DCI signals. Fig. **18** illustrates this advantage of linking of CG configurations for carrying a video stream with 60 fps. More specifically, CG1 is configured with a validity time of two active occasions. Furthermore, CG1 is linked to CG4. Hence, the CG1 is released after two occasions. Then, CG4 is activated.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment, UE, is provided that includes a circuitry and a transceiver. The circuitry, in operation: (a) obtains, from control signalling, an indication indicating a change of a configuration of transmission opportunities of a resource configuration with which the UE is configured, wherein (i) the resource configuration is a configured grant, CG, configuration, a semi-persistent scheduling, SPS, configuration or a scheduling request, SR, configuration, and (ii) the control signalling is a downlink control signalling, DCI, and/or the indication indicating the change is an indication of a validity time, the validity time being a time duration transmission opportunities of the resource configuration are valid after activation of the resource configuration; and (b) changes the configuration of the transmission opportunities by applying the indicated change. The transceiver, in operation: receives the control signalling, and receives or transmits a transmission using one of the transmission opportunities of the changed configuration.

According to a second aspect provided in addition to the first aspect, the UE is configured with one or more configuration groups, each (of said) configuration group comprises a plurality of resource configurations, each resource configuration (comprised in one of said configuration groups) being a CG configuration, a SPS configuration or a SR configuration, and the resource configuration being part of a configuration group of the configuration groups. Furthermore, the circuitry, in operation, changes, by applying the indicated change, also to configurations of transmission opportunities of other resource configurations of the configuration group, the other resource configurations being resource configurations in the configuration group other than the resource configuration.

According to a third aspect provided in addition to the second aspect, the transceiver, in operation, receives a configuration group control signalling; and the circuitry, in operation, obtains, from the configuration group control signalling, an indication indicating which resource configurations are in the configuration group of the resource configuration.

According to a fourth aspect provided in addition to the third aspect, the indication, indicating which resource configurations are in the configuration group of the resource configuration, (e.g. further) indicates that changes to the configuration of transmission opportunities of one of the resource configurations of the configuration group are to be applied to transmission opportunities of the other resource configurations of the configuration group, or the circuitry, in operation, obtains from the control signalling, an indication that the indication of the change applies to each resource configuration in the configuration group of the resource configuration.

According to a fifth aspect provided in addition to one of the first to fourth aspect, the control signalling is a DCI, and the indication indicating the change is an indication of: (i) a value of a parameter of the configuration, (ii) time offset to be applied to the resources of the configuration, (iii) a frequency offset to be applied to the resources of the configuration, (iv) a change of a periodicity of the resources of the configuration, and/or (v) a modulation and coding scheme, MCS, index. Furthermore, the circuitry, in operation, in the changing of the configuration of the transmission opportunities, changes the transmission opportunities by changing the resources of the configuration by: (i) updating the parameter of the configuration to the indicated value, (ii) applying the time offset to the resources of the configuration, (iii) applying the frequency offset to the resources of the configuration, (iv) updating the periodicity of the resources of the configuration, and/or (v) updating an MCS index of the configuration to the indicated MCS index.

According to a sixth aspect, provided in addition to the second or third aspect, the control signalling is a DCI, and the indication indicating the change is an indication to activate or deactivate the transmission opportunities of the resource configuration. Furthermore, the circuitry, in operation, in the changing of the configuration of the transmission opportunities: (i)if the indication indicating the change is an indication to activate the transmission opportunities of the resource configuration, activates transmission opportunities of resource configurations in the configuration group of the resource configuration, and (ii) if the indication indicating the change is an indication to deactivate the transmission opportunities of the resource configuration, deactivates the transmission opportunities of resource configurations in the configuration group of the resource configuration.

According to a seventh aspect provided in addition to the sixth aspect, the UE is configured to have resource configurations of at most one of the configuration groups active at a time; and the circuitry, in operation, if the indication indicating the change is an indication to activate the transmission opportunities of the resource configuration, deactivates the transmission opportunities of resource configurations that are not in the configuration group of the resource configuration.

According to an eighth aspect provided in addition to the sixth aspect, the resource configuration is part of more than one of the configuration groups. Furthermore, the circuitry, in operation, obtains from the control signalling, as part of the indication indicating the change of the resource configuration, an indication of one of the configuration groups to which the indication indicating the change applies, the indicated one configuration group being one of the configuration groups the resource configuration is part of. Furthermore, the circuitry, in operation, in the changing of the configuration of the transmission opportunities, if the indication indicating the change is an indication to activate the transmission opportunities of the indicated one configuration group: (i) activates transmission opportunities of resource configurations in the indicated one configuration group, and (ii) does not activate transmission opportunities of resource configurations not included in the indicated one configuration group. Moreover, the circuitry, in operation, if the indication indicating the change is an indication to deactivate the transmission opportunities of the indicated one configuration group: (i) deactivates transmission opportunities of resource configurations in the indicated one configuration group, and (ii) does not deactivate transmission opportunities of resource configurations not included in the indicated one configuration group.

According to an eighth aspect provided in addition to the sixth aspect, each the UE is configured to have resource configurations of at most one of the configuration groups active at a time; and the circuitry, in operation, if the indication indicating the change is an indication to activate the transmission opportunities of the indicated one configuration group, deactivates the transmission opportunities of resource configurations that are not in the configuration group of the resource configuration.

According to a tenth aspect provided in addition to any of the first to the fourth aspect, the control signalling is a DCI or a radio resource control, RRC, signalling; the indication indicating the change is the indication of the validity time; the transceiver, in operation, receives an activation control signalling; and the circuitry, in operation: (i) obtains, from the activation control signalling an indication to activate the resource configuration; and (ii) activates transmission opportunities of the resource configuration that are within a time interval with a length corresponding to the validity time.

According to an eleventh aspect provided in addition to the tenth aspect, the UE is configured with a plurality of resource configurations, each resource configuration being a CG configuration, a SPS configuration or a SR configuration, the plurality of resource configurations including the resource configuration; the transceiver, in operation, receives a resource configuration link control signalling; the circuitry, in operation, obtains, from the resource configuration link control signalling, an indication indicating that transmission opportunities of another resource configuration are to be activated when the transmission opportunities of the resource configuration are deactivated, the other resource configuration being a resource configuration of the plurality of resource configurations other than the resource configuration; and the circuitry, in operation, activates the transmission opportunities of the other resource configuration that are after the time interval in which the transmission opportunities of the resource configuration are active.

According to a twelfth provided in addition to the tenth or the eleventh aspect, the control signalling is the RRC signalling; and the circuitry, in operation, obtains, from the RRC signalling, an indication indicating resources of the resource configuration, thereby configuring the UE with the resource configuration.

According to a thirteenth aspect a method for a user equipment, UE, is proved. The method including the steps of: (i) receiving control signalling; (ii) obtaining, from the control signalling, an indication indicating a change of a configuration of transmission opportunities of a resource configuration with which the UE is configured, wherein (a) the resource configuration is a configured grant, CG, configuration, a semi-persistent scheduling, SPS, configuration or a scheduling request, SR, configuration, and (b) the control signalling is a downlink control signalling, DCI, and/or the indication indicating the change is an indication of a validity time, the validity time being a time duration transmission opportunities of the resource configuration are valid after activation of the resource configuration; (iii) changing the configuration of the transmission opportunities by applying the indicated change; and (iv) receiving or transmitting a transmission using one of the transmission opportunities of the changed configuration.

According to a fourteenth aspect, a scheduling device is provided. The scheduling device comprises a circuitry and a transceiver. The circuitry, in operation: (i) determines a change of a configuration of transmission opportunities of a resource configuration; and (i) generates a control signalling including an indication indicating the change, wherein (a) the resource configuration is a configured grant, CG, configuration, a semi-persistent scheduling, SPS, configuration or a scheduling request, SR, configuration, and (b) the control signalling is a downlink control signalling, DCI, and/or the indication indicating the change is an indication of a validity time, the validity time being a time duration transmission opportunities of the resource configuration are valid after activation of the resource configuration. The transceiver, in operation: (i) transmits the control signalling, and (ii) receives or transmits a transmission using one of the transmission opportunities of the changed configuration.

According to a fifteenth aspect, a method for a scheduling device is provided. The method including the steps of: (i) determining a change of a configuration of transmission opportunities of a resource configuration; (ii) generating a control signalling including an indication indicating the change, wherein (a) the resource configuration is a configured grant, CG, configuration, a semi-persistent scheduling, SPS, configuration or a scheduling request, SR, configuration, and (b) the control signalling is a downlink control signalling, DCI, and/or the indication indicating the change is an indication of a validity time, the validity time being a time duration transmission opportunities of the resource configuration are valid after activation of the resource configuration; (iii) transmitting the control signalling; and (iv) receiving or transmitting a transmission using one of the transmission opportunities of the changed configuration.

Further aspects are provided for the method according to the thirteenth aspect, corresponding to steps performed in operation by any of the UE of first to twelves aspects or described above.

Further aspects are provided for the scheduling device according to the fourteenth aspect, in which the circuitry in operation by any of the network nodes described above (in particular aspects in which the circuitry of the scheduling device generates and the transceiver transmits control signalling including any of the indications described above).

Further aspects are provided for the method according to the fifteenth aspect, corresponding to steps performed in operation by any of the network nodes described above (in particular aspects which includes steps of generation and transmitting control signalling including any of the indications described above).

According to a sixteenth aspect, a program stored on a (non-transitory) storage medium and including code instructions, which, when executed on one or more processors of a user equipment, cause the one or more processors to execute the steps of any of the above mentioned methods.

According to a seventeenth aspect, an integrated circuit is provided that includes processing circuitry and an interface to a (possibly external) transceiver. The processing circuitry is configured to (by hardware and/or software) (a) obtain, from control signalling, an indication indicating a change of a configuration of transmission opportunities of a resource configuration with which the UE is configured, wherein (i) the resource configuration is a configured grant, CG, configuration, a semi-persistent scheduling, SPS, configuration or a scheduling request, SR, configuration, and (ii) the control signalling is a downlink control signalling, DCI, and/or the indication indicating the change is an indication of a validity time, the validity time being a time duration transmission opportunities of the resource configuration are valid after activation of the resource configuration; and (b) change the configuration of the transmission opportunities by applying the indicated change. The processing circuitry may, over the interface to the transmitter, receive the control signalling, and receive or transmit a transmission using one of the transmission opportunities of the changed configuration.

According to an eighteenth aspect, an integrated circuit is provided that includes processing circuitry and an interface to a (possibly external) transceiver. The processing circuitry is configured to, by hardware and/or software, (i) determine a change of a configuration of transmission opportunities of a resource configuration; and (i) generate a control signalling including an indication indicating the change, wherein (a) the resource configuration is a configured grant, CG, configuration, a semi-persistent scheduling, SPS, configuration or a scheduling request, SR, configuration, and (b) the control signalling is a downlink control signalling, DCI, and/or the indication indicating the change is an indication of a validity time, the validity time being a time duration transmission opportunities of the resource configuration are valid after activation of the resource configuration. The processing circuitry may, over the interface to the transmitter (i) transmit the control signalling, and (ii) receive or transmit a transmission using one of the transmission opportunities of the changed configuration.

Summarizing, some exemplary embodiments relate to a communication device, a base station and respective methods for a communication device and a base station. For example, the communication device is a user equipment (UE) comprising a circuitry and a transceiver. The circuitry may be configured to (a) obtain, from control signalling, an indication indicating a change of a configuration of transmission opportunities of a resource configuration with which the UE is configured, wherein (i) the resource configuration is a configured grant (CG) configuration, a semi-persistent scheduling (SPS) configuration or a scheduling request (SR) configuration, and (ii) the control signalling is a downlink control signalling (DCI) and/or the indication indicating the change is an indication of a validity time, the validity time being a time duration transmission opportunities of the resource configuration are valid after activation of the resource configuration; and (b) change the configuration of the transmission opportunities by applying the indicated change. The transceiver may be configured to receive the control signalling, and to receive or transmit a transmission using one of the transmission opportunities of the changed configuration

## Claims

1. A user equipment, UE, comprising:
circuitry which, in operation:
- obtains, from control signalling, an indication indicating a change of a configuration of transmission opportunities of a resource configuration with which the UE is configured, wherein
∘ the resource configuration is a configured grant, CG, configuration, a semi-persistent scheduling, SPS, configuration or a scheduling request, SR, configuration, and
∘ the control signalling is a downlink control signalling, DCI, and/or the indication indicating the change is an indication of a validity time, the validity time being a time duration transmission opportunities of the resource configuration are valid after activation of the resource configuration; and
- changes the configuration of the transmission opportunities by applying the indicated change; and
a transceiver which, in operation:
- receives the control signalling, and
- receives or transmits a transmission using one of the transmission opportunities of the changed configuration.

2. The UE according to claim 1, wherein
the UE is configured with one or more configuration groups, each configuration group comprising a plurality of resource configurations, each resource configuration being a CG configuration, a SPS configuration or a SR configuration, the resource configuration being part of a configuration group of the configuration groups; and
the circuitry, in operation, changes, by applying the indicated change, also to configurations of transmission opportunities of other resource configurations of the configuration group, the other resource configurations being resource configurations in the configuration group other than the resource configuration.

3. The UE according to claim 2, wherein
the transceiver, in operation, receives a configuration group control signalling; and
the circuitry, in operation, obtains, from the configuration group control signalling, an indication indicating which resource configurations are in the configuration group of the resource configuration.

4. The UE according to claim 3, wherein
the indication indicating which resource configurations are in the configuration group of the resource configuration indicates that changes to the configuration of transmission opportunities of one of the resource configurations of the configuration group are to be applied to transmission opportunities of the other resource configurations of the configuration group, or
the circuitry, in operation, obtains from the control signalling, an indication that the indication of the change applies to each resource configuration in the configuration group of the resource configuration.

5. The UE according to any of claims 1 to 4, wherein
the control signalling is a DCI, and the indication indicating the change is an indication of:
- a value of a parameter of the configuration,
- a time offset to be applied to the resources of the configuration,
- a frequency offset to be applied to the resources of the configuration,
- a change of a periodicity of the resources of the configuration, and/or
- a modulation and coding scheme, MCS, index; and
the circuitry, in operation, in the changing of the configuration of the transmission opportunities, changes the transmission opportunities by changing the resources of the configuration by:
- updating the parameter of the configuration to the indicated value,
- applying the time offset to the resources of the configuration,
- applying the frequency offset to the resources of the configuration,
- updating the periodicity of the resources of the configuration, and/or
- updating an MCS index of the configuration to the indicated MCS index.

6. The UE according to claim 2 or 3, wherein,
the control signalling is a DCI, and the indication indicating the change is an indication to activate or deactivate the transmission opportunities of the resource configuration; and
the circuitry, in operation, in the changing of the configuration of the transmission opportunities:
- if the indication indicating the change is an indication to activate the transmission opportunities of the resource configuration, activates transmission opportunities of resource configurations in the configuration group of the resource configuration, and
- if the indication indicating the change is an indication to deactivate the transmission opportunities of the resource configuration, deactivates the transmission opportunities of resource configurations in the configuration group of the resource configuration.

7. The UE according to claim 6, wherein,
the UE is configured to have resource configurations of at most one of the configuration groups active at a time; and
the circuitry, in operation, if the indication indicating the change is an indication to activate the transmission opportunities of the resource configuration, deactivates the transmission opportunities of resource configurations that are not in the configuration group of the resource configuration.

8. The UE according to claim 6, wherein,
the resource configuration is part of more than one of the configuration groups;
the circuitry, in operation:
- obtains from the control signalling, as part of the indication indicating the change of the resource configuration, an indication of one of the configuration groups to which the indication indicating the change applies, the indicated one configuration group being one of the configuration groups the resource configuration is part of;
in the changing of the configuration of the transmission opportunities:
- if the indication indicating the change is an indication to activate the transmission opportunities of the indicated one configuration group:
∘ activates transmission opportunities of resource configurations in the indicated one configuration group, and
∘ does not activate transmission opportunities of resource configurations not included in the indicated one configuration group; and
- if the indication indicating the change is an indication to deactivate the transmission opportunities of the indicated one configuration group:
∘ deactivates transmission opportunities of resource configurations in the indicated one configuration group, and
∘ does not deactivate transmission opportunities of resource configurations not included in the indicated one configuration group.

9. The UE according to claim 8, wherein,
the UE is configured to have resource configurations of at most one of the configuration groups active at a time; and
the circuitry, in operation, if the indication indicating the change is an indication to activate the transmission opportunities of the indicated one configuration group, deactivates the transmission opportunities of resource configurations that are not in the configuration group of the resource configuration.

10. The UE according to any of claim 1 to 4, wherein
the control signalling is a DCI or a radio resource control, RRC, signalling;
the indication indicating the change is the indication of the validity time;
the transceiver, in operation, receives an activation control signalling; and
the circuitry, in operation:
- obtains, from the activation control signalling an indication to activate the resource configuration; and
- activates transmission opportunities of the resource configuration that are within a time interval with a length corresponding to the validity time.

11. The UE according to claim 10, wherein,
the UE is configured with a plurality of resource configurations, each resource configuration being a CG configuration, a SPS configuration or a SR configuration, the plurality of resource configurations including the resource configuration;
the transceiver, in operation, receives a resource configuration link control signalling;
the circuitry, in operation, obtains, from the resource configuration link control signalling, an indication indicating that transmission opportunities of another resource configuration are to be activated when the transmission opportunities of the resource configuration are deactivated, the other resource configuration being a resource configuration of the plurality of resource configurations other than the resource configuration; and
the circuitry, in operation, activates the transmission opportunities of the other resource configuration that are after the time interval in which the transmission opportunities of the resource configuration are active.

12. The UE according to claim 10 or 11, wherein,
the control signalling is the RRC signalling; and
the circuitry, in operation, obtains, from the RRC signalling, an indication indicating resources of the resource configuration, thereby configuring the UE with the resource configuration.

13. A method for a user equipment, UE, the method including the steps of:
receiving control signalling;
obtaining, from the control signalling, an indication indicating a change of a configuration of transmission opportunities of a resource configuration with which the UE is configured, wherein
- the resource configuration is a configured grant, CG, configuration, a semi-persistent scheduling, SPS, configuration or a scheduling request, SR, configuration, and
- the control signalling is a downlink control signalling, DCI, and/or the indication indicating the change is an indication of a validity time, the validity time being a time duration transmission opportunities of the resource configuration are valid after activation of the resource configuration;
changing the configuration of the transmission opportunities by applying the indicated change; and
receiving or transmitting a transmission using one of the transmission opportunities of the changed configuration.

14. A scheduling device, comprising:
a circuitry which, in operation:
- determines a change of a configuration of transmission opportunities of a resource configuration; and
- generates a control signalling including an indication indicating the change, wherein
∘ the resource configuration is a configured grant, CG, configuration, a semi-persistent scheduling, SPS, configuration or a scheduling request, SR, configuration, and
∘ the control signalling is a downlink control signalling, DCI, and/or the indication indicating the change is an indication of a validity time, the validity time being a time duration transmission opportunities of the resource configuration are valid after activation of the resource configuration; and
a transceiver which, in operation:
- transmits the control signalling, and
- receives or transmits a transmission using one of the transmission opportunities of the changed configuration.

15. A method for a scheduling device, the method including the steps of:
determining a change of a configuration of transmission opportunities of a resource configuration;
generating a control signalling including an indication indicating the change, wherein
- the resource configuration is a configured grant, CG, configuration, a semi-persistent scheduling, SPS, configuration or a scheduling request, SR, configuration, and
- the control signalling is a downlink control signalling, DCI, and/or the indication indicating the change is an indication of a validity time, the validity time being a time duration transmission opportunities of the resource configuration are valid after activation of the resource configuration;
transmitting the control signalling; and
receiving or transmitting a transmission using one of the transmission opportunities of the changed configuration.
